# EUROPÄISCHE PATENTSCHRIFT

(11) **EP 2 592 312 B1**
(45) Veröffentlichungstag und Bekanntmachung des Hinweises auf die Patenterteilung: **19.04.2017**
(21) Anmeldenummer: 12191713.2
(22) Anmeldetag: 08.11.2012
(51) Int. Cl.: F16K 1/44

(54) **Doppelsitzventil mit Spülventil**
Double-seat valve with flushing valve
Soupape à double siège avec soupape de rinçage

(30) Priorität: 08.11.2011 DE 102011085910
(43) Veröffentlichungstag der Anmeldung: 15.05.2013
(73) Patentinhaber: Krones AG, 93073 Neutraubling (DE)
(72) Erfinder: Sauer, Martin, 93073 Neutraubling (DE)
(74) Vertreter: Grünecker Patent- und Rechtsanwälte PartG mbB

(56) Entgegenhaltungen:
- DE-U1- 20 317 882
- DE-U1-202006 004 173
- JP-A- 2009 127 761
- US-A- 1 831 457
- US-A- 6 056 003

## Beschreibung

Die Erfindung umfasst eine Ventilvorrichtung, die ein Doppelsitz- und/oder Doppeldichtventil umfasst und ein Ventil zur Reinigung des Leckageraums des Doppelsitz- und/oder Doppeldichtventils, was im Folgenden als Reinigungsventil bezeichnet wird, sowie eine Maschine zum Befüllen von Behältern und eine Vorrichtung im Bereich der Lebensmittel- und Genussmittelhandhabung, die jeweils eine oder mehrere solche Ventilvorrichtungen umfasst.

Das Dokument WO 2009/056277 A1 offenbart ein sitzreinigungsfähiges Doppelsitzventil und Verfahren zur Reinigung des sitzreinigungsfähigen Doppelsitzventils.

Das Dokument DE 689 16 823 T2, eine Übersetzung der europäischen Patentschrift EP 0 332 806 B1, offenbart ein Ventil zum Steuern der Strömung einer sterilen Flüssigkeit und ein Zuführ- und Reinigungsgerät mit einem derartigen Ventil. In dem in diesem Dokument offenbarten System kann Dampf beispielsweise zum Sterilisieren in die Vorrichtung eingeführt werden, wenn die Verarbeitungsstufen angehalten werden.

Das Dokument DE 42 43 111 A1 offenbart eine aseptische Doppelsitzventilvorrichtung, das Dokument EP 0 646 741 A1 offenbart eine leckagefreie schaltende Doppelventilanordnung, und das Dokument DE 10 2007 027 765 A1 offenbart ein Doppelsitzventil. US1831457 offenbart eine Ventilvorrichtung gemäß dem Oberbegriff des Anspruchs 1. Doppelsitzventile und/oder Doppeldichtventile sind aus dem Stand der Technik bekannt. Sie werden beispielsweise für die Abfüllung von flüssigen und viskosen Stoffen in Behälter verwendet. Insbesondere im Bereich von aseptischen Anwendungen und/oder Lebensmittelabfüllung sind Spülventile zur Reinigung des Leckageraums üblicherweise senkrecht zur Längsachse des Hauptventils angeordnet.

Diese Anordnung führt dazu, dass das zuführende Spülventil möglicherweise nicht leer läuft und sich beispielsweise Reste von Reinigungsmittel, wie beispielsweise Reinigungsflüssigkeit, Kondensat, oder ähnliches im Spülventil oder am Ausgang des Spülventils ablagern können. Außerdem kann ein im Leckageraum sitzender Faltenbalg durch eine senkrechte Anordnung des Spülventils zur Längsachse des Hauptventils direkt angeströmt werden, was den Faltenbalg möglicherweise zusätzlich belastet und damit die Lebensdauer des Faltenbalges verringern kann.

Die Erfindung hat als Ziel eines oder mehrere der zuvor genannten, aus dem Stand der Technik bekannten Probleme zu lösen.

Die Erfindung ist gegeben durch eine Ventilvorrichtung nach dem Anspruch 1 und eine Maschine zum Befüllen von Behältern nach Anspruch 13 sowie eine Vorrichtung im Bereich der Lebensmittel- und Genussmittelhandhabung nach Anspruch 14. Eine erfindungsgemäße Ventilvorrichtung umfasst ein Doppelsitz- und/oder ein Doppeldichtventil sowie ein Ventil zur Reinigung des Leckageraums des Doppelsitz- und/oder Doppeldichtventils, das als Reinigungsventil bezeichnet wird. Bei einer erfindungsgemäßen Ventilvorrichtung schließt die Achse des Reinigungsventils einen Winkel zwischen 1° und 89° mit der Achse des Doppelsitz- und/oder Doppeldichtventils ein.

Der Winkel zwischen der Achse eines ersten Ventils und der Achse eines zweiten Ventils kann dabei wie folgt bestimmt werden. Ausgehend vom Leckageraum wird je ein Vektor parallel zur Achse des jeweiligen Ventils bestimmt. Dabei wird die Richtung des Vektors dadurch festgelegt, dass der Vektor von dem Leckageraum zur Betätigungsseite des jeweiligen Ventils zeigt. Als Betätigungsseite kann die Seite eines Ventils bezeichnet werden, in der Betätigungseinrichtungen, wie beispielsweise Federn zum Öffnen und Schließen (Bewegen) des Ventils angebracht sind. Um den Winkel zwischen der Achse des Reinigungsventils und der Achse des Doppelsitz- und/oder Doppeldichtventils zu bestimmen, wird nun der Winkel zwischen den jeweils dazugehörigen Vektoren bestimmt, also zwischen dem Vektor parallel zur Achse des Reinigungsventils und dem Vektor parallel zur Achse des Doppelsitz- und/oder Doppeldichtventils. Die Achsen können sich dabei schneiden oder windschief zueinander stehen.

Der Begriff Reinigungsmittel kann im Folgenden beispielsweise flüssige, dampfförmige, viskose oder ähnliche Materialien sowie auch Reste von Reinigungsmittel wie Kondensat umfassen. Auch wenn im Folgenden meist von Reinigungsmittel die Rede ist, da es sich um ein Reinigungsventil handelt, können andere Materialien wie beispielsweise andere Flüssigkeiten oder viskose oder dampfförmige Materialien analog durch die Vorrichtung und insbesondere beispielsweise auch durch das Reinigungsventil geleitet werden.

Die Ventilvorrichtung kann so ausgebildet sein, dass die Achse des Reinigungsventils einen Winkel zwischen 30° und 70° mit der Achse des Doppelsitz- und/oder Doppeldichtventils einschließt. Dieser Winkelbereich kann eine vereinfachte Konstruktion der Ventilvorrichtung erlauben und auch vorteilhafte Eigenschaften beim Einleiten des Reinigungsmittels begründen.

Eine erfindungsgemäße Ventilvorrichtung kann insbesondere so ausgebildet sein, dass der Winkel zwischen der Achse des Reinigungsventils und der Achse des Doppelsitz- und/oder Doppeldichtventils einen Winkel einschließt, der kleiner als oder gleich der Differenz von 90° und dem Sitzwinkel des Reinigungsventils ist. Damit kann beispielsweise das Ablaufen von Reinigungsmittel bzw. Reinigungsmittelresten in den Leckageraum erleichtert werden.

Als Sitzwinkel eines Ventils wird hier der Winkel bezeichnet, den die Wand des Ventils an der Öffnung mit der Achse des Ventils einschließt. Bei Betrachtung der Wand wird vorzugsweise die innere Wand des Ventils verwendet, die beispielsweise auch mit Reinigungsmittel in Kontakt kommen kann. Der Winkel wird in einer Ebene gemessen, die vorzugsweise die Achse des Ventils umfasst. Wenn in der Ebene kein Schnittpunkt zwischen der Wand und der Achse des Ventils vorhanden ist, kann in der Ebene eine erste Gerade, die tangential an der Wand der Öffnung des Reinigungsventils anliegt, bestimmt werden. Ebenso kann eine zweite Gerade bestimmt werden, die die Achse des Reinigungsventils umfasst. Der Sitzwinkel kann dann als der Schnittwinkel der der ersten mit der zweiten Gerade bestimmt werden.

Ein Sitzwinkel eines Ventils kann in einem Bereich zwischen 0° und 90° liegen. Er kann insbesondere zwischen 20° und 70° liegen, insbesondere um die 45° (z.B. 45°± 10°).

Die Ventilvorrichtung kann so ausgebildet sein, dass die Öffnung des Reinigungsventils einteilig mit dem Doppelsitz- und/oder Doppeldichtventil ausgebildet ist. Insbesondere kann die Öffnung des Reinigungsventils einteilig mit der Wand des Doppelsitz- und/Oder Doppeldichtventils ausgebildet sein. Das restliche Reinigungsventil kann dann beispielsweise auf die Öffnung aufgesetzt werden.

Dies kann vorteilhaft sein, da sich dadurch Spalten und Öffnungen zwischen der Öffnung des Reinigungsventils und dem Doppelsitz- und/oder Doppeldichtventil vermeiden lassen. In solchen Spalten und Öffnungen zwischen der Öffnung des Reinigungsventils und dem Doppelsitz- und/oder Doppeldichtventil können sich beispielsweise Produktreste, Reste von Reinigungsmittel und Bakterien festsetzen, da sie schwer zu reinigen sind.

Eine erfindungsgemäße Ventilvorrichtung kann so ausgebildet sein, dass die Ausgangsrichtung des Reinigungsventils so angeordnet ist, dass aus dem Ventil austretendes Reinigungsmittel vom Reinigungsventil teilsweise oder ganz in Richtung des Ventiltellers des Doppelsitz- und/oder Doppeldichtventils geleitet wird. Dies kann insbesondere bedeuten, dass aus dem Reinigungsventil austretendes Reinigungsmittel oder zumindest Teile davon vor dem Auftreffen auf dem Ventilteller auf kein Hindernis in Form eines Bauteils der Ventilvorrichtung trifft, wenn es nicht durch Turbulenzen oder ähnliches abgelenkt wird. Das zuvor beschriebene Merkmal und auch das nachfolgende Merkmal erfordern beispielsweise nicht, dass Reinigungsmittel tatsächlich im Reinigungsventil, Leckageraum oder sonst vorhanden ist. Es beschreibt lediglich, wie sich Flüssigkeit oder ähnliches beispielsweise in einer Ausführungsform bedingt durch die Bauart einer erfindungsgemäßen Vorrichtung verhalten würden.

Alternativ oder zusätzlich kann die Ventilvorrichtung auch so ausgebildet sein, dass die Ausgangsrichtung des Reinigungsventils so angeordnet ist, dass aus dem Reinigungsventil austretendes Reinigungsmittel teilweise oder ganz in Richtung (mindestens) eines Bereichs der Wand des Leckageraumes orientiert ist und/oder teilweise oder ganz unter einem Winkel, der nicht senkrecht ist, auf den Faltenbalg geleitet wird. Die Richtungsangaben kann hier wieder als Zielangabe verstanden werden für ein Ziel, wo das austretende Reinigungsmittel oder Teile davon auftreffen würde ohne zuvor auf andere Hindernisse in Form eines Bauteils der Ventilvorrichtung zu treffen, wenn es nicht durch Turbulenzen oder ähnliches zuvor abgelenkt wird.

Eine erfindungsgemäße Ventilvorrichtung kann so ausgebildet sein, dass die Gerade, die die Achse des Reinigungsventils umfasst, die Gerade, die die Achse des Doppelsitz- und/oder Doppeldichtventils umfasst (also die jeweiligen Achsen) sich schneiden. Der Schnittpunkt kann dabei innerhalb oder außerhalb des Leckageraums oder auf dem Rand des Leckageraums liegen. Alternativ kann die Ventilvorrichtung so ausgebildet sein, dass die Achse des Reinigungsventils und die Achse des Doppelsitz- und/oder Doppeldichtventils windschief zueinander stehen. In diesem Fall liegen die Geraden, die jeweils die Achse der entsprechenden Ventile umfassen, zwar nicht parallel zueinander, schneiden sich aber auch nicht.

Alternativ oder zusätzlich kann auch die Vorrichtung so ausgebildet sein, dass bei vertikaler Anordnung des Doppelsitz- und/oder Doppeldichtventils in dem Reinigungsventil befindliche Flüssigkeit bei offenen Reinigungsventil vollständig in den Leckageraum ablaufen kann. Zusätzlich oder alternativ kann die Vorrichtung so ausgebildet sein, dass bei geschlossenem Reinigungsventil Reste (beispielsweise des Reinigungsmittels), wie beispielsweise Kondensat vollständig in den Leckageraum ablaufen können, also insbesondere beispielsweise nicht an der Ventilöffnung zurückbleiben.

Bei einer vertikalen Anordnung des Doppelsitz- und/oder Doppeldichtventils kann die Betätigungsseite des Doppeldichtventils (die beispielsweise Federn zur Bewegung des Doppelsitz- und/oder Doppeldichtventils umfassen kann), oben angeordnet sein. Dass beispielsweise im oder am Ausgang des Reinigungsventil befindliche Flüssigkeiten ablaufen können, bedeutet nicht notwendigerweise, dass das Ventil auch tatsächlich für Flüssigkeiten genutzt werden muss. Es kann auch nur beschreiben, dass, wenn es für eine Flüssigkeit genutzt würde, selbige in den Leckageraum ablaufen könnte, und zwar unter der Bedingung, dass es dort keinen Rückstau von Flüssigkeit gibt, der das Abfließen verhindern würde, also beispielsweise ein Ablauf geöffnet ist oder ähnliches.

In einigen Ausführungsformen kann die Ventilvorrichtung so ausgebildet sein, dass die Achse des Reinigungsventils durch den Leckageraum verläuft, dass also die Gerade, die die Achse des Reinigungsventils umfasst, durch den Leckageraum verläuft. Die zuvor beschriebene Gerade (Achse) kann einen Schnittpunkt mit der Wand des Leckageraums aufweisen und/oder zwei Schnittpunkte mit der Wand des Leckageraums aufweisen.

Eine erfindungsgemäße Ventilvorrichtung umfasst einen Ablauf im Leckageraum. Vorzugsweise kann der Ablauf ein Ventil umfassen, das im Folgenden auch als Ablaufventil bezeichnet wird.

Insbesondere kann so ein Ablauf für das Ablassen von Reinigungsmitteln wie beispielsweise Reinigungsflüssigkeit genutzt werden. Gemäß der Erfindung schließt die Achse des Ablaufs einen Winkel von 90° oder mehr mit der Achse des Doppelsitz- und/oder Doppeldichtventils ein. Hierbei kann der Winkel wie bereits zuvor beschrieben zwischen zwei Vektoren gemessen werden. Der erste Vektor verläuft vom Leckageraum in Richtung des Ablaufs, wobei die Richtung des Ablaufs beispielsweise dadurch bestimmt werden kann, dass die Ausgangsrichtung einer Flüssigkeit aus dem Leckageraum bei nicht turbulenter Strömung betrachtet wird. Die Richtung des Ablaufs ist dann die Richtung, in die die Flüssigkeit beim Ausgang aus dem Leckageraum ohne Turbulenzen strömt/strömen würde. Der Winkel zwischen diesem Vektor und dem Vektor, ausgehend vom Leckageraum parallel zur Achse des Doppelsitz- und/oder Doppeldichtventils in Richtung der Betätigungsseite des Ventils kann bestimmt werden. Bei einem Wert von gleich oder mehr als 90° für diesen Winkel kann Reinigungsmittel beispielsweise bei einer vertikalen Anordnung des Doppelsitz- und/oder Doppeldichtventils leichter abfließen.

In einigen Ausführungsformen einer erfindungsgemäßen Ventilvorrichtung kann das Reinigungsventil und/oder das Ablaufventil jeweils einzeln und/oder jeweils zusammen teilweise oder ganz geöffnet und/oder geschlossen werden. Dies kann eine Koordination des Zu- und Ablaufs von beispielsweise Reinigungsmittel ermöglichen.

In einigen Ausführungsformen kann das Doppelsitz- und/oder Doppeldichtventil während der Reinigung des Leckageraums verschlossen bleiben.Ein Reinigungsventil, das von einer erfindungsgemäßen Ventilvorrichtung verwendet werden kann, kann eine oder mehr Zuführungen für ein oder mehr verschiedene Reinigungsmittel und/oder andere, beispielsweise flüssige, dampfförmige oder viskose Stoffe umfassen.

Eine erfindungsgemäße Ventilvorrichtung kann auch zusätzlich zu dem zuvor beschriebenen Reinigungsventil ein weiteres Reinigungsventil umfassen, dessen Achse mit der Achse des Doppelsitz- und/oder Doppeldichtventils beispielsweise einen Winkel von etwa 90° oder zwischen 85° und 95° einschließen kann. Ein solches weiteres Reinigungsventil kann beispielsweise so ausgebildet sein, dass es durch seine Anordnung dazu geeignet ist andere Bereiche des Leckageraums mit Reinigungsmitteln zu beaufschlagen als das zuvor beschriebene erste Reinigungsventil. Alternativ und/oder zusätzlich kann ein solches Reinigungsventil auch als Ablauf verwendet werden oder vorgesehen sein.

Die Erfindung umfasst auch eine Maschine zum Befüllen von Behältern und eine Vorrichtung im Bereich der Lebensmittel- und Genussmittelhandhabung, wie beispielsweise eine Abfüllanlage oder ein Tanklager, insbesondere beispielsweise im aseptischen Bereich, die jeweils eine oder mehrere zuvor beschriebene Ventilvorrichtungen umfassen.

Weitere Ausführungsformen und Vorteile der Erfindung werden anhand der Figuren nachfolgend beschrieben. Dabei zeigt
- Fig. 1: eine Ventilvorrichtung und
- Fig. 2: einen schematischen Ausschnitt einer Ventilvorrichtung.

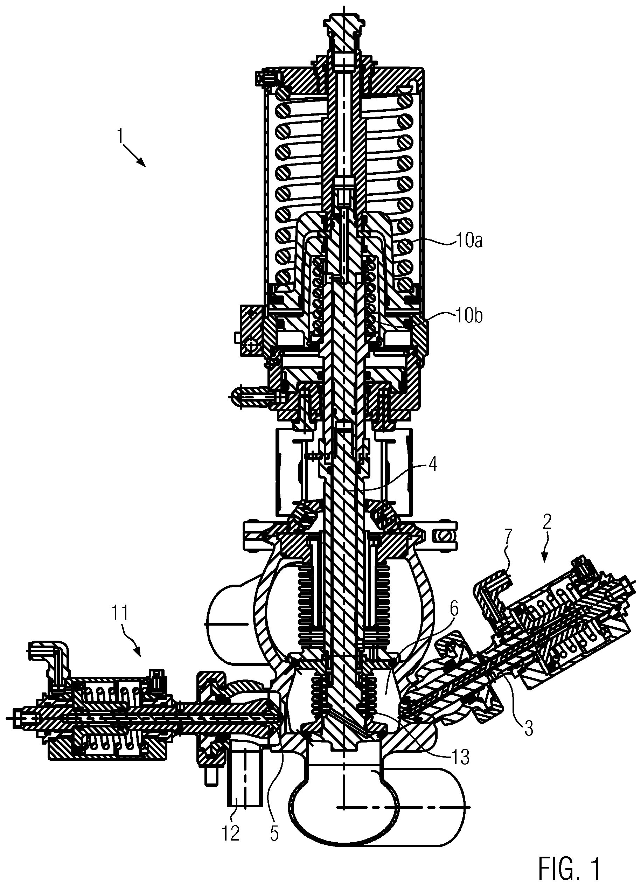

Eine Ausführungsform einer erfindungsgemäßen Ventilvorrichtung umfasst ein Doppelsitz- und/oder Doppeldichtventil 1. Sie umfasst weiterhin ein Reinigungsventil 2. Die Achse des Reinigungsventils ist mit 3 bezeichnet und die Achse des Doppelsitz- und/oder Doppeldichtventils mit 4. Eine erfindungsgemäße Ventilvorrichtung umfasst weiterhin einen Leckageraum 6. Ferner kann eine erfindungsgemäße Vorrichtung, wie in Fig. 1 gezeigt, ein weiteres Ventil 11, umfassen, das als zweites Reinigungsventil ausgebildet sein kann, wie hier beispielhaft gezeigt. Zusätzlich oder alternativ kann dieses Ventil in dieser Ausführungsform als Ablaufventil wirken, durch das bei Öffnung des selbigen im Leckageraum vorhandene Flüssigkeit, wie z.B. Reinigungsmittel und/oder andere Materieformen, wie beispielsweise Dampf oder ähnliches, durch das optionale Ablaufrohr 12 abgeleitet werden können. In anderen Ausführungsformen kann ein Ablauf anders angeordnet sein.

Ein Doppelsitz- und/oder Doppeldichtventil kann eine oder mehrere Federn 10a, 10b umfassen, die zum Öffnen und/oder Schließen (Bewegen) des Doppelsitz- und/oder Doppeldichtventils verwendet werden können. Diese können einen Teil der Betätigungseinrichtung des Doppelsitz- und/oder Doppeldichtventils darstellen. In Fig. 1 ist ein Doppelsitz- und/oder Doppeldichtventil gezeigt, das vertikal angeordnet ist und bei dem die Federn oberhalb des Leckageraums angebracht sind. Dies ist ein Beispiel für eine Anordnung eines Doppelsitz- und/oder Doppeldichtventils, das so auch zur Verwendung eingebaut sein kann. Auch eine leicht schräge Anordnung, bei der die Achse des Doppelsitz- und/oder Doppeldichtventils beispielsweise einen Winkel zwischen 0° und 50°, insbesondere zwischen 0° und 25°, insbesondere zwischen 0° und 5° mit der Vertikalen einschließt, ist möglich.

Anhand der Ausführungsform in Fig. 1 kann man auch erkennen, warum eine Anordnung das Reinigungsventil so, dass eine Achse einen Winkel zwischen 1° rund 89°, insbesondere zwischen 30° und 70° mit der Achse des Doppelsitz- und/oder Doppeldichtventils einschließt, vorteilhaft sein kann, beispielsweise bei vertikaler Anordnung der Ventilvorrichtung. Durch diese Schrägstellung des Reinigungsventils kann nämlich in einigen Ausführungsformen im Reinigungsventil vorhandene Flüssigkeit oder andere viskose oder dampfförmige Materie, beispielsweise zur Reinigung des Leckageraums, bei geöffnetem Reinigungsventil vollständig oder großteils in den Leckageraum 6 ablaufen und/oder Reste von Reinigungsmitteln bei geschlossenem Reinigungsventil von dem Bereich der Öffnung des Reinigungsventils vollständig oder großteils in den Leckageraum 6 ablaufen (zumindest, wenn ein Ablauf aus dem Leckageraum 6 vorhanden und geöffnet ist und sich daher kein Rückstau bildet, der die Flüssigkeit am Ablaufen hindert). Zusätzlich kann durch die schräge Anordnung des Reinigungsventils ein direktes Anströmen des Faltenbalgs 13 des Leckageraums 6 verhindert werden. Dies kann die Wahrscheinlichkeit der Beschädigung desselben durch beispielsweise Reinigungsmittel verringern und damit eine erhöhte Lebensdauer des Balges zur Folge haben.

Außerdem kann durch eine schräge Anordnung des Reinigungsventils, wie zuvor beschrieben, beispielsweise die Austrittsrichtung von Reinigungsmitteln oder ähnlichen aus dem Reinigungsventil so angeordnet sein, dass das ganze oder Teile des austretenden Reinigungsmittels direkt den Ventilteller beaufschlagen kann. Dies kann eine bessere Reinigung des Ventiltellers zur Folge haben. Zusätzlich kann durch die Anordnung ein größeres Verwirbeln der Reinigungsmittel hervorgerufen werden, was zu einer besseren Reinigungswirkung führen kann.

Zusätzlich oder alternativ kann die Anordnung des Reinigungsventils so sein, dass die Austrittsrichtung von Reinigungsmitteln oder ähnlichem aus dem Reinigungsventil so liegt, dass das ganze oder Teile des austretenden Reinigungsmittels nicht direkt den Ventilteller beaufschlagen kann und/oder die Wand des Leckageraumes beaufschlagen kann und/oder den Faltenbalg unter einem anderen Winkel als 90° zur Achse des Doppelsitz- und/oder Doppeldichtventils beaufschlagen kann.

In einigen Ausführungsformen der Erfindung kann der Ablauf so angeordnet sein, dass er am tiefsten Punkt des Leckageraums beginnt, wobei das Doppelsitz- und/oder Doppeldichtventil 1 bei vertikaler Anordnung betrachtet wird. In der hier angegebenen Ausführungsform von Fig. 1 ist der Ablauf, wie in einigen Ausführungsmöglichkeiten, so angeordnet, dass seine Achse in dem am Leckageraum anschließenden Stück senkrecht zur Achse des Doppelsitz- und/oder Doppeldichtventils verläuft. Nach einem kurzen oder längeren waagrechten Bereich kann dann, wie hier gezeigt, in einigen Ausführungsformen ein Ablaufrohr 12 oder ähnliches in einer Richtung parallel zur Achse des Doppelsitz- und/oder Doppeldichtventils verlaufen. Auch ein Ablaufrohr in andere Richtungen, die jedoch vorzugsweise in einer Richtung verläuft, so dass bei vertikaler Anordnung des Doppelsitz- und/oder Doppeldichtventils Reinigungsmittel wie beispielsweise flüssige, viskose oder dampfförmige Reinigungsmittel nach unten abfließen können, ist möglich.

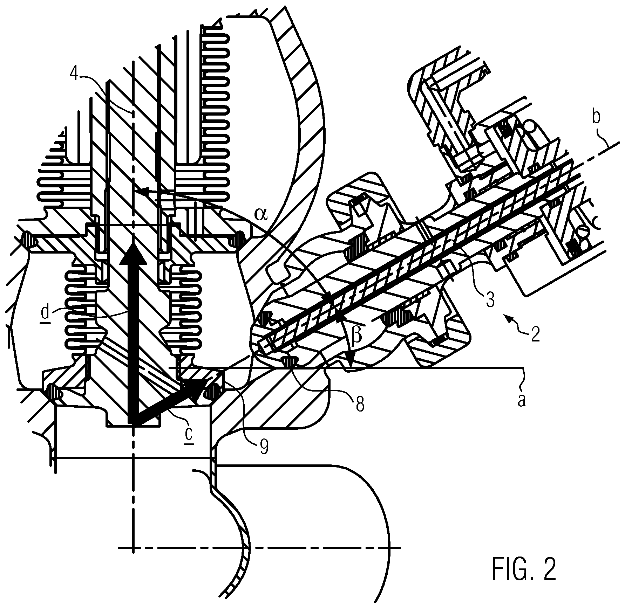

Fig. 2 zeigt einen Ausschnitt aus einer erfindungsgemäßen Ausführungsform der Ventilvorrichtung. Eingezeichnet sind hierbei die Achse 4 des Doppelsitz- und/oder Doppeldichtventils sowie die Achse 3 des Reinigungsventils 2.

Figur 2 zeigt, dass der Winkel zwischen der Achse des Reinigungsventils 3 und der Achse des Doppelsitz- und/oder Doppeldichtventils 1, der Winkel α, einen Wert von zwischen 1° und 89° hat. Insbesondere hat er in dem dargestellten Fall einen Wert von ungefähr 60°. Die Richtung der Vektoren c (parallel zur Achse des Reinigungsventils) und d (parallel zur Achse des Doppelsitz- und/oder Doppeldichtventils), die zur Bestimmung des Winkels verwendet werden können, ist in Figur 2 eingezeichnet.

Der Sitzwinkel des Reinigungsventils, der in der Zeichnung in Fig. 2 als β bezeichnet ist, hat einen Wert von ungefähr 30° in diesem Fall. Die zur Bestimmung des Sitzwinkels β betrachteten Geraden a, b sind eingezeichnet.

Bei der in Fig. 2 gezeigten Anordnung einer Ausführungsform schließt die Achse des Reinigungsventils mit der Achse des Doppelsitz- und/oder Doppeldichtventils einen Winkel von 90° - β ein. In anderen Ausführungsformen kann dieser Winkel α zwischen der Achse des Reinigungsventils und der Achse des Doppelsitz- und/oder Doppeldichtventils auch kleiner als 90° - β sein. In diesem Fall ist dann nicht, wie in Fig. 2 gezeigt, ein Bereich an dem Ausgang des Reinigungsventils vorhanden, der hier als Bereich 8 bezeichnet ist, der waagrecht zur Achse des Doppeldichtventils verläuft, sondern dieser Bereich 8 verläuft in anderen Ausführungsformen ebenfalls schräg (schließt also mit der Waagrechten einen Winkel ein), so dass Reinigungsmittel leichter ablaufen könnte.

In der in Figur 2 dargestellten Ausführungsform ist die Öffnung des Reinigungsventils (2) einteilig mit der Wand des Doppelsitz- und/oder Doppeldichtventil (1) ausgebildet.

In der in Fig. 2 gezeigten Ausführungsform kann, wie in einigen Ausführungsformen der Erfindung, aus dem Reinigungsventil 2 austretendes Reinigungsmittel (oder mindestens Teile davon) direkt auf den Ventilteller 9 gelangen, ohne zuvor an andere Bauteile zu stoßen.

In der Ausführungsform von Fig. 2 schneiden sich die Achse des Doppelsitz- und/oder Doppeldichtventils und die Achse des Reinigungsventils im Bereich des Leckageraums. In anderen Ausführungsformen können die beiden Achsen auch windschief zueinander stehen.

## Patentansprüche

1. Ventilvorrichtung umfassend ein Doppelsitz- und/oder Doppeldichtventil (1) und ein Ventil (2) zur Reinigung des Leckageraums (6) des Doppelsitz- und/oder Doppeldichtventils (1), das als Reinigungsventil (2) bezeichnet ist, wobei die Achse (3) des Reinigungsventils (2) einen Winkel zwischen 1° und 89° mit der Achse (4) des Doppelsitz- und/oder Doppeldichtventils (1) einschließt und die Ventilvorrichtung einen Ablauf (5) im Leckageraum (6) umfasst, **dadurch gekennzeichnet, dass** die Achse des Ablaufs einen Winkel von 90° oder mehr mit der Achse (4) des Doppelsitz- und/oder Doppeldichtventils (1) einschließt.

2. Ventilvorrichtung nach Anspruch 1, **dadurch gekennzeichnet, dass** die Achse (3) des Reinigungsventils (2) einen Winkel zwischen 30° und 70° mit der Achse (4) des Doppelsitz- und/oder Doppeldichtventils (1) einschließt
und/oder
dass der Winkel zwischen der Achse des Doppelsitz- und/oder Doppeldichtventils (1) und dem Reinigungsventil (2), das einen Sitzwinkel (β) hat, einen Winkel (α) einschließt, der kleiner als die oder gleich der Differenz von 90° und dem Sitzwinkel (β) ist.

3. Ventilvorrichtung nach einem der Ansprüche 1 oder 2, **dadurch gekennzeichnet, dass** die Öffnung des Reinigungsventils (2) einteilig mit dem Doppelsitz- und/oder Doppeldichtventil (1) ausgebildet ist.

4. Ventilvorrichtung nach einem der Ansprüche 1 bis 3, **dadurch gekennzeichnet, dass** die Ausgangsrichtung des Reinigungsventils (2) so angeordnet ist, dass Reinigungsmittel vom Reinigungsventil (2) in Richtung des Ventilteller des Doppelsitz- und/oder Doppeldichtventils (1) geleitet werden kann
und/oder
dass die Ausgangsrichtung des Reinigungsventils so angeordnet ist, dass Reinigungsmittel in Richtung eines Bereichs der Wand des Leckageraumes orientiert ist.

5. Ventilvorrichtung nach einem der Ansprüche 1 bis 4, **dadurch gekennzeichnet, dass** sich die Achse (3) des Reinigungsventils (2) und die Achse (4) des Doppelsitz- und/oder Doppeldichtventils (1) schneiden, oder dass die Achsen des Reinigungsventils (2) und des Doppelsitz- und/oder Doppeldichtventils (1) windschief zueinander sind.

6. Ventilvorrichtung nach einem der Ansprüche 1 bis 5, **dadurch gekennzeichnet, dass** das Reinigungsventil (2) so angeordnet ist, dass bei vertikaler Anordnung des Doppelsitz- und/oder Doppeldichtventils (1) in dem Reinigungsventil (2) befindliche Flüssigkeit und/oder Reste wie Kondensat bei offenem und/oder geschlossenem Reinigungsventil (2) vollständig in den Leckageraum (6) ablaufen kann.

7. Ventilvorrichtung nach einem der Ansprüche 1 bis 6, **dadurch gekennzeichnet, dass** die Achse (3) des Reinigungsventils (2) durch den Leckageraum (6) verläuft.

8. Ventilvorrichtung nach einem der Ansprüche 1 bis 7, **dadurch gekennzeichnet, dass** der Ablauf (5) im Leckageraum (6) ein Ventil umfasst, das auch Ablaufventil genannt werden kann.

9. Ventilvorrichtung nach Anspruch 8, **gekennzeichnet dadurch,dass** der Ablauf so angebracht ist, dass er bei vertikaler Ausrichtung des Doppelsitz- und/oder Doppeldichtventils (1) am tiefsten Punkt des Leckageraums (6) beginnt.

10. Ventilvorrichtung nach einem der Ansprüche 1 bis 9, **dadurch gekennzeichnet, dass** das Reinigungsventil (2) und/oder das Ablaufventil (11) jeweils zusammen und/oder einzeln geöffnet und/oder geschlossen werden können.

11. Ventilvorrichtung nach einem der Ansprüche 1 bis 10, **gekennzeichnet dadurch, dass** das Reinigungsventil (2) eine oder mehrere Zuführungen (7) für ein oder mehrere verschiedene Reinigungsmittel umfasst.

12. Ventilvorrichtung nach einem der Ansprüche 1 bis 11, **gekennzeichnet dadurch, dass** die Ventilvorrichtung zusätzlich ein weiteres Reinigungsventil umfasst, dessen Achse mit der Achse des Doppelsitz und/oder Doppeldichtventils einen Winkel von etwa 90° oder zwischen 85° und 95° einschließt.

13. Maschine zum Befüllen von Behältern, **gekennzeichnet dadurch, dass** sie eine oder mehrere Ventilvorrichtungen nach einem der Ansprüche 1 bis 12 umfasst.

14. Vorrichtung im Bereich der Lebensmittel- und Genussmittelhandhabung, wie beispielsweise eine Abfüllanlage oder ein Tanklager, insbesondere beispielsweise im aseptischen Bereich, **gekennzeichnet dadurch, dass** sie eine oder mehrere Ventilvorrichtungen nach einem der Ansprüche 1 bis 12 umfasst.

## Claims

1. Valve device comprising a double-seat and/or double seal valve (1) and a valve (2) to clean the leakage space (6) of the double-seat and/or double seal valve (1), which is referred to as a cleaning valve (2), wherein the axis (3) of the cleaning valve (2) forms an angle between 1° and 89° with the axis (4) of the double-seat and/or double seal valve (1) and the valve device comprises a drain (5) in the leakage space (6), **characterized in that** the axis of the drain forms an angle of 90° or greater with the axis (4) of the double-seat and/or double seal valve (1).

2. Valve device in accordance with claim 1, **characterized in that** the axis (3) of the cleaning valve (2) forms an angle between 30° and 70° with the axis (4) of the double-seat and/or double seal valve (1)
and/or
that the angle between the axis of the double-seat and/or double seal valve (1) and the cleaning valve (2), which has a seating angle (β), forms an angle (α) that is smaller, or equal to the difference of 90° and the seating angle (β).

3. Valve device according to one of the claims 1 or 2, **characterized in that** the opening of the cleaning valve (2) is formed as a single part with the double-seat and/or double seal valve (1).

4. Valve device in accordance with one of the claims 1 to 3, **characterized in that** the exit orientation of the cleaning valve (2) is arranged in such a manner that cleaning agents can be directed from the cleaning valve (2) in the direction of the valve plate of the double-seat and/or double seal valve (1)
and/or
that the exit orientation of the cleaning valve is arranged in such a manner that cleaning agent is directed in the direction of a region of the wall of the leakage space.

5. Valve device in accordance with one of the claims 1 to 4, **characterized in that** the axis (3) of the cleaning valve (2) and the axis (4) of the double-seat and/or double seal valve (1) intersect, or that the axes of the cleaning valve (2) and the double-seat and/or double seal valve (1) are skew to each other.

6. Valve device in accordance with one of the claims 1 to 5, **characterized in that** the cleaning valve (2) is arranged in such a manner that a vertical arrangement of the double-seat and/or double seal valve (1) causes the fluids and/or residue, such as condensate, present in the cleaning valve (2) to drain completely into the leakage space (6) when the cleaning valve (2) is open and/or closed.

7. Valve device in accordance with one of the claims 1 to 6, **characterized in that** the axis (3) of the cleaning valve (2) goes through the leakage space (6).

8. Valve device in accordance with one of the claims 1 to 7, **characterized in that** the drain (5) in the leakage space (6) comprises a valve that can also be referred to as a drain valve.

9. Valve device in accordance with claim 8, **characterized in that** the drain is arranged in such a manner that it begins at the lowest point of the leakage space (6) when the double-seat and/or double seal valve (1) is oriented vertically.

10. Valve device in accordance with one of the claims 1 to 9, **characterized in that** the cleaning valve (2) and/or the drain valve (11) can each be opened and/or closed together and/or individually.

11. Valve device in accordance with one of the claims 1 to 10, **characterized in that** the cleaning valve (2) comprises one or several feed lines (7) for one or several cleaning agents.

12. Valve device in accordance with one of the claims 1 to 11, **characterized in that** the valve device additionally comprises a further cleaning valve, where the axis of said further cleaning valve forms an angle of approximately 90° or between 85° and 95° with the axis of the double-seat and/or double seal valve.

13. Machine for filling containers, **characterized in that** said machine has one or several valve devices in accordance with one of the claims 1 to 12.

14. Device in the foodstuff and beverage processing industries, such as for instance a bottling plant or a tank warehouse, in particular e.g. in the aseptic field, **characterized in that** said machine comprises one or several valve devices in accordance with one of the claims 1 to 12.

## Revendications

1. Dispositif de soupape comprenant une soupape à double siège et/ou à double étanchéité (1) et une soupape (2) pour le nettoyage de la chambre de fuite (6) de la soupape à double siège et/ou à double étanchéité (1), qui est désignée comme soupape de nettoyage (2), l'axe (3) de la soupape de nettoyage (2) formant un angle entre 1° et 89° avec l'axe (4) de la soupape à double siège et/ou à double étanchéité (1), et le dispositif de soupape comportant un écoulement d'évacuation (5) dans la chambre de fuite (6), **caractérisé en ce que** l'axe de l'écoulement d'évacuation forme un angle de 90° ou davantage avec l'axe (4) de la soupape à double siège et/ou à double étanchéité (1).

2. Dispositif de soupape selon la revendication 1, **caractérisé en ce que** l'axe (3) de la soupape de nettoyage (2) forme un angle entre 30° et 70° avec l'axe (4) de la soupape à double siège et/ou à double étanchéité (1),
et/ou
**en ce que** l'angle entre l'axe de la soupape à double siège et/ou à double étanchéité (1) et la soupape de nettoyage (2), qui présente un angle de siège (β), correspond à un angle (α) inférieur ou égal à la différence entre 90° et l'angle de siège (β).

3. Dispositif de soupape selon l'une des revendications 1 ou 2, **caractérisé en ce que** l'ouverture de la soupape de nettoyage (2) est réalisée d'un seul tenant avec la soupape à double siège et/ou à double étanchéité (1).

4. Dispositif de soupape selon l'une des revendications 1 à 3, **caractérisé en ce que** la direction de sortie de la soupape de nettoyage (2) est agencée de manière telle, que le fluide de nettoyage puisse être dirigé à partir de la soupape de nettoyage (2) en direction du disque d'obturation de soupape de la soupape à double siège et/ou à double étanchéité (1),
et/ou
**en ce que** la direction de sortie de la soupape de nettoyage est agencée de manière à ce que du fluide de nettoyage soit orienté en direction d'une zone de la paroi de la chambre de fuite.

5. Dispositif de soupape selon l'une des revendications 1 à 4, **caractérisé en ce que** l'axe (3) de la soupape de nettoyage (2) et l'axe (4) de la soupape à double siège et/ou à double étanchéité (1) se coupent, ou bien **en ce que** les axes de la soupape de nettoyage (2) et de la soupape à double siège et/ou à double étanchéité (1) sont inclinés de manière gauche l'un par rapport à l'autre.

6. Dispositif de soupape selon l'une des revendications 1 à 5, **caractérisé en ce que** la soupape de nettoyage (2) est agencée de manière telle, que pour un agencement vertical de la soupape à double siège et/ou à double étanchéité (1), du liquide et/ou des restes tels du condensat se trouvant dans la soupape de nettoyage (2), puissent s'écouler en totalité dans la chambre de fuite (6) pour une soupape de nettoyage (2) ouverte et/ou fermée.

7. Dispositif de soupape selon l'une des revendications 1 à 6, **caractérisé en ce que** l'axe (3) de la soupape de nettoyage (2) s'étend à travers la chambre de fuite (6).

8. Dispositif de soupape selon l'une des revendications 1 à 7, **caractérisé en ce que** l'écoulement d'évacuation (5) dans la chambre de fuite (6) comporte une soupape que l'on peut également appeler soupape d'écoulement d'évacuation.

9. Dispositif de soupape selon la revendication 8, **caractérisé en ce que** l'écoulement d'évacuation est agencé de manière telle, que pour une orientation verticale de la soupape à double siège et/ou à double étanchéité (1), il débute au point le plus bas de la chambre de fuite (6).

10. Dispositif de soupape selon l'une des revendications 1 à 9, **caractérisé en ce que** la soupape de nettoyage (2) et/ou la soupape d'écoulement d'évacuation (11) peuvent être ouvertes et/ou fermées respectivement en commun et/ou individuellement.

11. Dispositif de soupape selon l'une des revendications 1 à 10, **caractérisé en ce que** la soupape de nettoyage (2) comporte une ou plusieurs alimentation (7) pour un ou plusieurs fluides dé nettoyage différents.

12. Dispositif de soupape selon l'une des revendications 1 à 11, **caractérisé en ce que** le dispositif de soupape comporte en supplément une autre soupape de nettoyage dont l'axe forme avec l'axe de la soupape à double siège et/ou à double étanchéité, un angle d'environ 90° ou entre 85° et 95°.

13. Machine destinée au remplissage de contenants, **caractérisée en ce qu'**elle comporte un ou plusieurs dispositifs de soupape selon l'une des revendications 1 à 12.

14. Dispositif dans le domaine du traitement de produits alimentaires ou de denrées d'agrément, comme par exemple une installation de remplissage ou un réservoir de stockage, notamment dans le domaine aseptisé, **caractérisé en ce qu'**il comporte un ou plusieurs dispositifs de soupape selon l'une des revendications 1 à 12.
